# EUROPÄISCHE PATENTSCHRIFT

(11) **EP 3 695 450 B1**
(45) Veröffentlichungstag und Bekanntmachung des Hinweises auf die Patenterteilung: **11.08.2021**
(21) Anmeldenummer: 18786240.4
(22) Anmeldetag: 02.10.2018
(51) Int. Cl.: H01M 8/0612, H01M 8/0668, H01M 8/0662, H01M 8/04007, H01M 8/0444, H01M 8/04664, H01M 8/1018

(54) **BRENNSTOFFZELLE MIT REFORMER**
FUEL CELL WITH REFORMER
PILE À COMBUSTIBLE COMPRENANT UN REFORMEUR

(30) Priorität: 13.10.2017 DE 102017218334
(43) Veröffentlichungstag der Anmeldung: 19.08.2020
(73) Patentinhaber: thyssenkrupp Marine Systems GmbH, 24143 Kiel (DE); thyssenkrupp AG, 45143 Essen (DE)
(72) Erfinder: KRUMMRICH, Stefan, 24634 Padenstedt (DE); MECHSNER, Alfred, 24148 Kiel (DE); REINERS, Karsten, 24232 Schönkirchen (DE); RUSER, Dennis, 24211 Preetz (DE)
(74) Vertreter: thyssenkrupp Intellectual Property GmbH
(86) Internationale Anmeldenummer: PCT/EP2018/076738
(87) Internationale Veröffentlichungsnummer: WO 2019/072628

(56) Entgegenhaltungen:
- EP-A2- 1 753 061
- US-A1- 2003 224 230
- US-A1- 2005 064 253
- US-A1- 2011 136 027

## Beschreibung

Die Erfindung betrifft eine Vorrichtung zur Energieerzeugung mittels eines Reformers und einer Brennstoffzelle, wobei die Vorrichtung auch bei einem Versagen der Gasreinigungsmembran weiter funktionsfähig bleibt.

In einem Reformer wird beispielsweise Methanol in CO und H₂ umgesetzt, wobei das CO vorzugsweise mit Wasserdampf in einer Shiftreaktion zu CO₂ und H₂ umgesetzt wird. Es verbleibt jedoch regelmäßig ein Rest an Kohlenmonoxid in Gasgemisch. Aus diesem Gasgemisch wird der Wasserstoff üblicherweise über eine Gasreinigungsmembran abgetrennt, wobei vorteilhafter Weise nur Wasserstoff durch die Membran diffundiert. Im Versagensfall könnte jedoch Kohlenmonoxid durch die Membran gelangen. Wenn Kohlenmonoxid in die Brennstoffzelle gelangt, kann diese dadurch Schaden nehmen.

Um dieses zu verhindern, müsste die Vorrichtung zur Energieerzeugung sofort abgeschaltet werden. Treibt die Vorrichtung zur Energieerzeugung jedoch beispielsweise ein Unterseeboot an, so wäre damit die Energieerzeugung unterbunden. Dieses wäre ein unerwünschter Zustand.

Aus der DE 699 28 417 T2 ist ein Verfahren zum Entfernen von Kohlenmonoxid aus einem Kohlenwasserstoffreformat in einem elektrokatalytischen Oxidationsprozess bekannt.

Aus der US 3,884,838 ist eine Shiftreaktion zur Reduktion von Kohlenmonoxid bekannt.

Aus der US 2005 / 001003 A2 ist eine Katalysatorzusammensetzung für die Umsetzung von Kohlenmonoxid mit Wasserstoff bekannt.

Aus der DE 600 32 027 T2 ist System und ein Verfahren zum frühen Nachweis eines drohenden Versagens der Wasserstoff-Reiniger bekannt.

Aus der US 2005 / 064253 A1 ist eine Methode zur Vermeidung von Kontamination einer Brennstoffzelle bekannt.

Aus der US 2011 / 136027 A1 ist eine Vorrichtung zur Erzeugung von Wasserstoff mit einem Reformer bekannt.

Aus der US 2003 / 224230 A1 ist ein Kontrollsystem für ein System aus Reformer und Brennstoffzelle bekannt.

Aufgabe der Erfindung ist es, eine Vorrichtung zur Energieerzeugung zu schaffen, welche einen Betrieb auch bei einer Kohlenmonoxidleckage in der Gasreinigungsmembran ermöglicht.

Gelöst wird diese Aufgabe durch eine Vorrichtung zur Energieerzeugung mit den in Anspruch 1 angegebenen Merkmalen. Vorteilhafte Weiterbildungen ergeben sich aus den Unteransprüchen, der nachfolgenden Beschreibung sowie den Zeichnungen.

Die erfindungsgemäße Vorrichtung zur Energieerzeugung weist einen Reformer, eine Gasreinigungsmembran und eine Brennstoffzelle auf, wobei der Reformer zur Erzeugung von Wasserstoff ausgebildet ist, die Gasreinigungsmembran zur Abtrennung von Wasserstoff aus dem im Reformer erzeugten Gasgemisch ausgebildet ist und die Brennstoffzelle zur Erzeugung von elektrischer Energie durch Umsetzung von durch die Gasreinigungsmembran abgetrennten Wasserstoff ausgebildet ist. Die Vorrichtung zur Energieerzeugung weist eine Umwandlungsvorrichtung zur Umwandlung von Kohlenmonoxid in Methan auf. Die Umwandlungsvorrichtung ist zwischen der Gasreinigungsmembran und der Brennstoffzelle angeordnet, wobei die Umwandlungsvorrichtung und die Gasreinigungsmembran thermisch gekoppelt sind.

Die thermische Kopplung erfolgt bevorzugt dadurch, dass die Umwandlungsvorrichtung und die Gasreinigungsmembran einen gemeinsamen Gasraum aufweisen. Die Umwandlungsvorrichtung und die Gasreinigungsmembran sind somit nicht zum Beispiel über eine Rohrleitung miteinander verbunden. Durch eine Rohrleitung ist eine Strömung ausschließlich in eine Richtung möglich, sodass eine Rückkopplung durch eine Rohrleitung verhindert wird.

Vorteil der Erfindung ist es, das sicher verhindert wird, dass Kohlenmonoxid in die Brennstoffzelle gelangt. Durch die thermische Kopplung ist die Umwandlungsvorrichtung jederzeit einsatzbereit. Ein gesondertes Beheizen entfällt. Des Weiteren können der Reformer und die Brennstoffzelle, wenn auch mit verringertem Wirkungsgrad, auch im Versagensfall weiter betrieben werden, sodass die Sicherheit der mit elektrischer Energie versorgten Systeme gewährleistet ist.

Erfindungsgemäß sind die Umwandlungsvorrichtung und die Gasreinigungsmembran innerhalb eines gemeinsamen Gehäuses angeordnet. Die gemeinsame Anordnung innerhalb eines Gehäuses ist eine einfache Umsetzung der thermischen Kopplung. Zudem werden Übergänge vermieden, welche eine potentielle Stelle für Wasserstoffleckagen darstellen können.

Erfindungsgemäß ist die Umwandlungsvorrichtung oberhalb der Gasreinigungsmembran angeordnet. Vorzugsweise wird innerhalb der Gasreinigungsmembran der gewonnene Wasserstoff nach oben abgeführt. Dieses ist technisch aufgrund des geringen Molekulargewichts vorteilhaft. Die Umwandlungsvorrichtung ist somit vorteilhafterweise vor dem Ausgang angeordnet.

Besonders bevorzugt ist die Umwandlungsvorrichtung im oberen Bereich des Gehäuses der Umwandlungsvorrichtung angeordnet. Bevorzugt ist der obere Bereich des Gehäuses der Umwandlungsvorrichtung in Form eines Klöpperbodens ausgeführt. Um die Vorrichtung gasdicht auszuführen, werden die Gehäuse regelmäßig zylindrisch mit Klöpperböden ausgeführt. Der Raum im Klöpperboden wird üblichweise bautechnisch nicht genutzt, sondern dient als Wasserstoffsammelraum. Durch die Verwendung dieses Bauraums wird kein zusätzlicher Bauraum benötigt.

In einer weiteren Ausführungsform der Erfindung ist hinter der Umwandlungsvorrichtung ein Sensor zur Erfassung von Methan angeordnet ist. Diese Ausführungsform ist besonders bevorzugt. Methan ist wesentlich einfacher und genauer als Kohlenmonoxid detektierbar. Somit ist es mit einer Umwandlungsvorrichtung und einem Sensor für Methan deutlich einfacher und sicherer ein Versagen der Gasreinigungsmembran zu detektieren. Prinzipiell kann der Sensor zur Erfassung von Methan an jeder Stelle zwischen der Umwandlungsvorrichtung und der Brennstoffzelle angeordnet sein. Bevorzugt ist der Sensor zur Erfassung von Methan in der Verbindungsleitung angeordnet. Besonders bevorzugt ist der Sensor zur Erfassung von Methan in der Verbindungsleitung in räumlicher Nähe zu der Umwandlungsvorrichtung angeordnet.

In einer weiteren Ausführungsform der Erfindung ist der Sensor ein optischer Sensor.

In einer weiteren Ausführungsform der Erfindung besteht die Gasreinigungsmembran wenigstens teilweise aus Palladium oder einer Palladiumlegierung.

Besonders bevorzugt wird die erfindungsgemäße Vorrichtung zur Energieerzeugung auf einem Unterwasserfahrzeug, insbesondere auf einem Unterseeboot, verwendet.

In einem weiteren Aspekt betrifft die Erfindung ein Unterwasserfahrzeug, insbesondere ein Unterseeboot, mit einer erfindungsgemäßen Vorrichtung zur Energieerzeugung.

Nachfolgend ist die erfindungsgemäße Vorrichtung zur Energieerzeugung anhand von in den Zeichnungen dargestellten Ausführungsbeispielen näher erläutert.
- Fig. 1: erste Vorrichtung zur Energieerzeugung
- Fig. 2: zweite Vorrichtung zur Energieerzeugung
- Fig. 3: dritte Vorrichtung zur Energieerzeugung

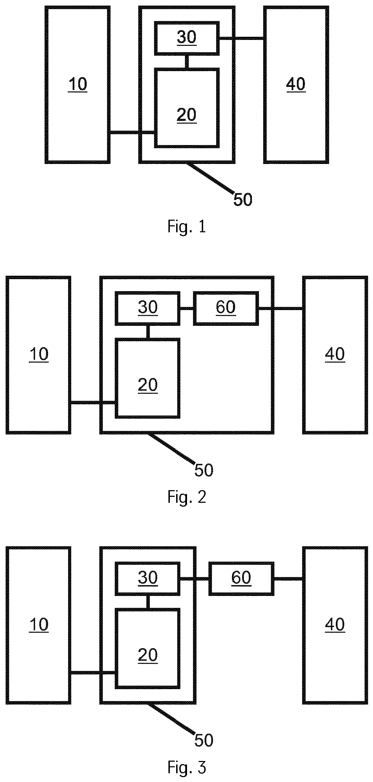

In Fig. 1 ist eine erste Vorrichtung zur Energieerzeugung gezeigt. Diese weist einen Reformer 10 auf, in welchem Beispielsweise aus Methanol, Wasserstoff erzeugt wird. Das Gasgemisch aus dem Reformer 10 gelangt zur Gasreinigungsmembran 20. Die Gasreinigungsmembran 20 ist nur für Wasserstoff durchlässig, andere Gase werden abgeführt, üblicherweise in einen Brenner zur Erzeugung der notwendigen Energie für den Reformer 10. Aus der Gasreinigungsmembran 20 wird der Wasserstoff über eine Umwandlungsvorrichtung 30 zur Brennstoffzelle 40 geleitet. Im normalen Prozess passiert nichts an der Umwandlungsvorrichtung 30. Tritt jedoch ein Defekt an der Gasreinigungsmembran 20 auf, kann Kohlenmonoxid in den Gasstrom gelangen. Dieses Kohlenmonoxid wird an der Umwandlungsvorrichtung 30 zu Methan umgesetzt, welches für die Brennstoffzelle 40 unproblematisch ist. Die Gasreinigungsmembran 20 und die Umwandlungsvorrichtung 30 befinden sich innerhalb eines Gehäuses 50 und sind damit thermisch gekoppelt. Durch die Betriebstemperatur der Gasreinigungsmembran 20 wird auch die Umwandlungsvorrichtung 30 auf Betriebstemperatur gehalten, auch wenn diese nicht verwendet wird, ohne dass hierfür zusätzliche Energie benötigt wird.

Fig. 2 zeigt eine zweite Vorrichtung zur Energieerzeugung, welche sich von der erste Vorrichtung zur Energieerzeugung dadurch unterscheidet, dass hinter der Umwandlungsvorrichtung 30 innerhalb des Gehäuses ein Sensor 60 angeordnet ist. Dieser Sensor 60 detektiert Methan. Da Methan leichter und sicherer zu detektieren wird, kann so eine Leckage der Gasreinigungsmembran 20 schnell und sicher festgestellt werden.

Fig. 3 zeigt eine zweite Vorrichtung zur Energieerzeugung, welche sich von der erste Vorrichtung zur Energieerzeugung dadurch unterscheidet, dass hinter der Umwandlungsvorrichtung 30 außerhalb des Gehäuses ein Sensor 60 angeordnet ist. Dieser Sensor 60 detektiert Methan. Da Methan leichter und sicherer zu detektieren wird, kann so eine Leckage der Gasreinigungsmembran 20 schnell und sicher festgestellt werden.

### Bezugszeichen

- 10: Reformer
- 20: Gasreinigungsmembran
- 30: Umwandlungsvorrichtung
- 40: Brennstoffzelle
- 50: Gehäuse
- 60: Sensor

## Patentansprüche

1. Vorrichtung zur Energieerzeugung, wobei die Vorrichtung zur Energieerzeugung einen Reformer (10), eine Gasreinigungsmembran (20) und eine Brennstoffzelle (40) aufweist, wobei der Reformer (10) zur Erzeugung von Wasserstoff ausgebildet ist, wobei die Gasreinigungsmembran (20) zur Abtrennung von Wasserstoff aus dem im Reformer (10) erzeugten Gasgemisch ausgebildet ist, wobei die Brennstoffzelle (40) zur Erzeugung von elektrischer Energie durch Umsetzung von durch die Gasreinigungsmembran (20) abgetrennten Wasserstoff ausgebildet ist, wobei die Vorrichtung zur Energieerzeugung eine Umwandlungsvorrichtung (30) zur Umwandlung von Kohlenmonoxid in Methan aufweist, **dadurch gekennzeichnet, dass** die Umwandlungsvorrichtung (30) zwischen der Gasreinigungsmembran (20) und der Brennstoffzelle (40) angeordnet ist, wobei die Umwandlungsvorrichtung (30) und die Gasreinigungsmembran (20) thermisch gekoppelt sind, wobei die Umwandlungsvorrichtung (30) und die Gasreinigungsmembran (20) innerhalb eines gemeinsamen Gehäuses (50) angeordnet sind, wobei die Umwandlungsvorrichtung (30) oberhalb der Gasreinigungsmembran (20) angeordnet ist.

2. Vorrichtung zur Energieerzeugung nach Anspruch 1, **dadurch gekennzeichnet, dass** hinter der Umwandlungsvorrichtung (30) ein Sensor (60) zur Erfassung von Methan angeordnet ist.

3. Vorrichtung zur Energieerzeugung nach Anspruch 2, **dadurch gekennzeichnet, dass** der Sensor (60) ein optischer Sensor ist.

4. Vorrichtung zur Energieerzeugung nach einem der vorstehenden Ansprüche, **dadurch gekennzeichnet, dass** die Gasreinigungsmembran (20) wenigstens teilweise aus Palladium oder einer Palladiumlegierung besteht.

## Claims

1. Apparatus for energy generation, where the apparatus for energy generation comprises a reformer (10), a gas purification membrane (20) and a fuel cell (40), where the reformer (10) is configured for producing hydrogen, where the gas purification membrane (20) is configured for separating hydrogen from the gas mixture produced in the reformer (10), where the fuel cell (40) is configured for generating electric energy by reaction of hydrogen separated off by means of the gas purification membrane (20), where the apparatus for energy generation comprises a conversion apparatus (30) for converting carbon monoxide into methane, **characterized in that** the conversion apparatus (30) is arranged between the gas purification membrane (20) and the fuel cell (40), where the conversion apparatus (30) and the gas purification membrane (20) are thermally coupled, where the conversion apparatus (30) and the gas purification membrane (20) are arranged within a common housing (50), where the conversion apparatus (30) is arranged above the gas purification membrane (20).

2. Apparatus for energy generation according to Claim 1, **characterized in that** a sensor (60) for detecting methane is arranged behind the conversion apparatus (30).

3. Apparatus for energy generation according to Claim 2, **characterized in that** the sensor (60) is an optical sensor.

4. Apparatus for energy generation according to any of the preceding claims, **characterized in that** the gas purification membrane (20) consists at least partially of palladium or a palladium alloy.

## Revendications

1. Dispositif de production d'énergie, le dispositif de production d'énergie présentant un reformeur (10), une membrane de nettoyage de gaz (20) et une pile à combustible (40), le reformeur (10) étant réalisé pour produire de l'hydrogène, la membrane de nettoyage de gaz (20) étant réalisée pour séparer l'hydrogène du mélange gazeux produit dans le reformeur (10), la pile à combustible (40) étant réalisée pour produire de l'énergie électrique par la décomposition de l'hydrogène séparé par la membrane de nettoyage de gaz (20), le dispositif de production d'énergie présentant un dispositif de transformation (30) pour transformer du monoxyde de carbone en méthane,
**caractérisé en ce que** le dispositif de transformation (30) est disposé entre la membrane de nettoyage de gaz (20) et la pile à combustible (40), le dispositif de transformation (30) et la membrane de nettoyage de gaz (20) étant couplés thermiquement, le dispositif de transformation (30) et la membrane de nettoyage de gaz (20) étant disposés à l'intérieur d'un boîtier commun (50), le dispositif de transformation (30) étant disposé au-dessus de la membrane de nettoyage de gaz (20) .

2. Dispositif de production d'énergie selon la revendication 1, **caractérisé en ce qu'**un capteur (60) pour détecter du méthane est disposé derrière le dispositif de transformation (30).

3. Dispositif de production d'énergie selon la revendication 2, **caractérisé en ce que** le capteur (60) est un capteur optique.

4. Dispositif de production d'énergie selon l'une quelconque des revendications précédentes, **caractérisé en ce que** la membrane de nettoyage de gaz (20) est composée au moins partiellement de palladium ou d'un alliage de palladium.
